# EUROPEAN PATENT APPLICATION

(11) **EP 2 869 242 A1**
(43) Date of publication of application: **06.05.2015**
(21) Application number: 14181940.9
(22) Date of filing: 22.08.2014
(51) Int. Cl.: G06K 13/063, G07F 19/00

(54) **Medium processing device**

(30) Priority: 31.10.2013 JP 2013227573
(71) Applicant: Fujitsu Frontech Limited, Inagi-shi, Tokyo 206-8555 (JP)
(72) Inventor: Takada, Youji, Inagi-shi, Tokyo 206-8555 (JP); Watanabe, Masato, Inagi-shi, Tokyo 206-8555 (JP)
(74) Representative: Fenlon, Christine Lesley

(57) **Abstract**

A medium processing device (1) includes a conveyance path (10) for convoying a medium (100), a hitting guide part (14) that is positioned on the side of one end of a width direction (an arrow D2) of the conveyance path and has a hit surface (14a) hit by a side surface (a left end 100d) of the medium 100, and a magnetic read/write unit (2a) for reading/writing magnetic information of the medium (100) on the conveyance path. The hitting guide part (14) has an escape part (a concave part 14b) that is opposed to the side surface (the left end 100d) of part of the medium (100) when the magnetic information is read/written by the magnetic read/write unit (2a) and takes a position separate from the hit surface (14a).

## Description

The present invention relates to a medium processing device that executes processes (such as a read/write, printing and the like of magnetic information) for a medium (such as a passbook, a business form or the like).

Conventionally, a medium processing device is used integrally with or independently of an automated transaction device such as an ATM (Automated Teller Machine) or the like. This medium processing device executes processes such as a read/write, printing and the like of magnetic information for a medium such as a passbook, a business form or the like.

In the medium processing device, magnetic information of a passbook as a medium is read from a magnetic stripe, and additional magnetic information is written after processes such as printing, page turning and the like are executed.

Furthermore, when a new passbook is issued due to renewal of a passbook, an old passbook is conveyed to a temporary storage after magnetic information of the old passbook is read and additional magnetic information is printed. Then, the new passbook is ejected outside the device after processes such as a read/write, page turning, printing and the like of magnetic information are executed. Thereafter, the old passbook is taken from the temporary storage, and returned outside the device after the magnetic information is erased.

Incidentally, since a medium is sometimes bent, a printing device having a deformed medium correction mechanism that corrects a deformation such as a bending or the like is known (for example, see Japanese Laid-open Patent Publication No. 2013-28073).

Additionally, a medium conveying device having an alignment mechanism that hits a medium against a running reference surface on a conveyance path is known (for example, see Japanese Laid-open Patent publication No. 09-40211).

Furthermore, a medium processing device where a guide member or the like is arranged at an insertion slot of a medium in order to properly bring even a deformed medium into the device is known (for example, see Japanese Laid-open Patent Publication No. 2002-87628).

It is desirable to provide a medium processing device that enables a read/write error of magnetic information of a deformed medium to be suppressed with a simple configuration.

An embodiment of the disclosed medium processing device includes a conveyance path for conveying a medium, a hitting guide part that is positioned on the side of one end of a width direction of the conveyance path and has a hit surface hit by a side surface of the medium, and a magnetic read/write unit for reading/writing magnetic information of the medium on the conveyance path. The hitting guide part has an escape part that is opposed to the side surface of part of the medium when the magnetic information is read/written by the magnetic read/write unit and takes a position separate from the hit surface.

The invention is described, by way of example only, with reference to the following drawings, in which:
FIG. 1 is a front view illustrating an internal structure of a medium processing device according to a first embodiment;
FIG. 2 is a plan view of a hitting guide part and the like in the first embodiment;
FIG. 3 is a cross-sectional view taken along III-III illustrated in FIG. 2;
FIG. 4A is a plan view illustrating a medium where a bent portion is caused in a magnetic stripe;
FIG. 4B is an arrow view in an A direction illustrated in FIG. 4A;
FIG. 5A illustrates magnetic waveforms of a magnetic read/write unit in the first embodiment;
FIG. 5B illustrates magnetic waveforms where a B portion illustrated in FIG. 5A is enlarged;
FIG. 6A illustrates magnetic waveforms of a magnetic read/write unit in a comparison example;
FIG. 6B illustrates magnetic waveforms where a C portion illustrated in FIG. 6A is enlarged;
FIG. 7 is a plan view illustrating a hitting guide part and the like in the second embodiment;
FIG. 8A is a plan view illustrating a biasing mechanism in the second embodiment;
FIG. 8B is an arrow view in an E direction illustrated in FIG. 8A;
FIG. 9 is a plan view illustrating a hitting guide part and the like in a third embodiment;
FIG. 10 is a plan view illustrating a biasing mechanism in the third embodiment;
FIG. 11 is a plan view illustrating a magnetic read/write unit and the like in a reference technique;
FIG. 12 is a plan view illustrating a medium where a bent portion is caused in a magnetic stripe;
FIG. 13 is an enlarged view of a G portion illustrated in FIG. 12; and
FIG. 14 is an arrow view in an F direction illustrated in FIG. 11.

### DESCRIPTION OF EMBODIMENTS

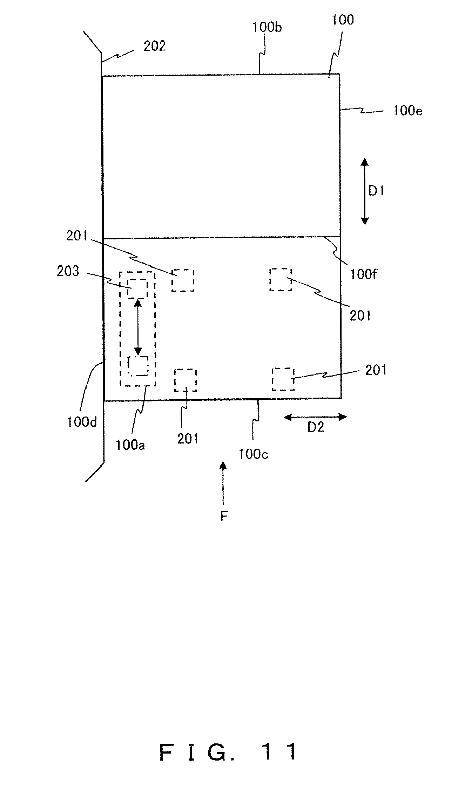

FIG. 11 is a plan view illustrating a magnetic read/write unit 203 in a reference document;

As illustrated in FIG. 11, a medium 100 as a passbook is conveyed in a conveyance direction (an arrow D1) in a state where a bound part 100f at the center is open. A front end 100b and a rear end 100c of the medium 100 are positioned in parallel to the bound part 100f.

The left end 100d of the medium 100 is conveyed in a state where the left end 100d is hit against a hitting guide part 202 in a width direction (an arrow D2) orthogonal to the conveyance direction (the arrow D1). In the neighborhood of a right end 100e of the medium 100, a guide part that is opposed to the hitting guide part 202 and is not illustrated is arranged.

A magnetic read/write unit 203 reads/writes magnetic information of a magnetic stripe 100a from the side of a bottom of the medium 100 while moving in the conveyance direction (the arrow D1). The magnetic stripe 100a is positioned on the side of the rear end 100c closer to the rear than the bound part 100f and on the side of the left end 100d.

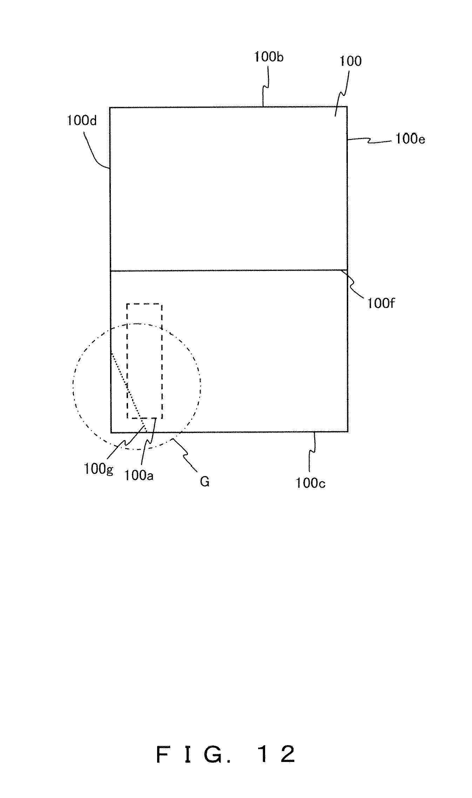

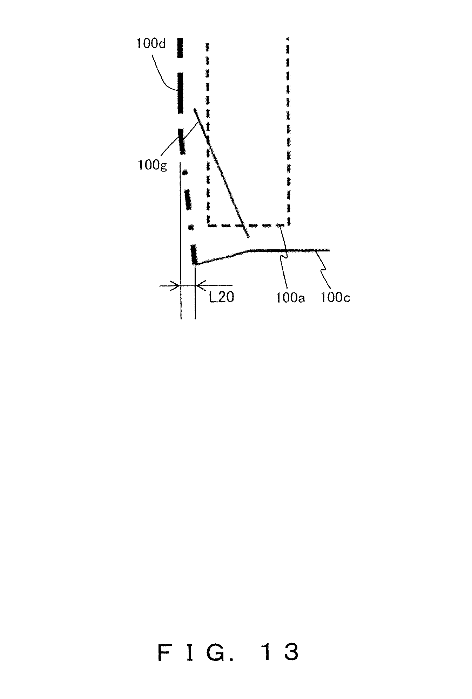

The medium 100 is deformed in many cases, and a bent part 100g is sometimes caused in the magnetic stripe 100a as illustrated in FIG. 12. In a state where the bent part 100g is caused as described above, as illustrated in FIG. 13 (an enlarged view of a G portion illustrated in FIG. 12), a left rear end of the passbook (an angle formed by an intersection of the left end 100d and the rear end 100c) is bent downward, so that a position of the left rear end of the medium 100 shifts by an interval L20 (for example, by approximately 1 mm) in the above described width direction (the arrow D2).

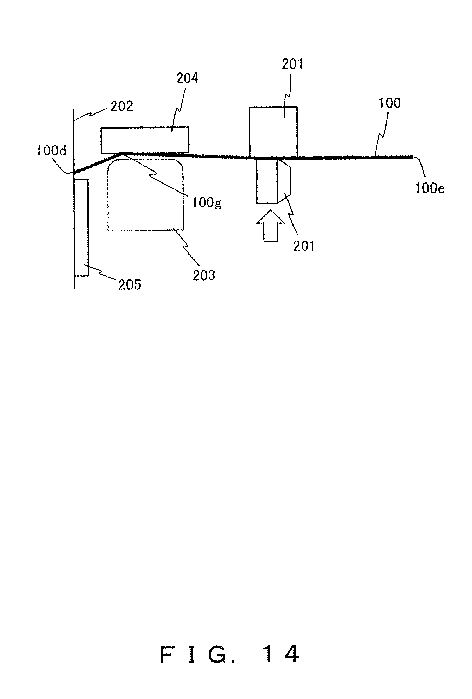

Accordingly, as illustrated in FIG. 14 (an arrow view of an F direction illustrated in FIG. 11), the left end 100d of the deformed portion deformed by the bent part 100g hits the hitting guide part 202, so that an escape space of the deformed portion of the medium 100 disappears even if the medium 100 is sandwiched between the magnetic read/write unit 203 and a shoe part 204, and the magnetic stripe 100a comes closer to the side of the shoe part 204 than the magnetic read/write unit 203. Therefore, the magnetic read/write unit 203 and the medium 100 do not make close contact with each other, so that a read/write error of the magnetic information is caused by the magnetic read/write unit 203.

For example, it is difficult to restore the medium 100 to a state where the medium 100 is not bent by correcting the bending of the medium 100 as described in Japanese Laid-open Patent Publication No. 2013-28073.

Medium processing devices according to embodiments are described below with reference to the drawings.

### <First embodiment>

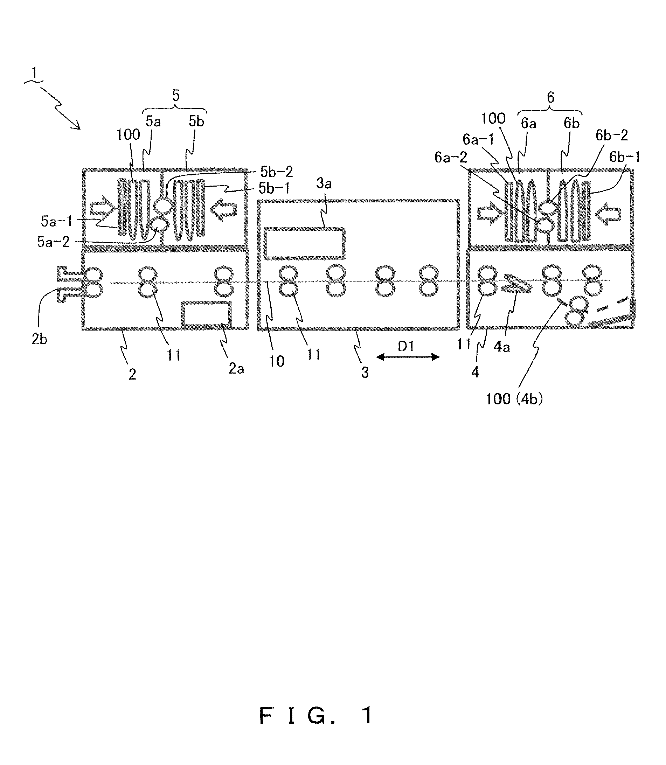

FIG. 1 is a front view illustrating an internal structure of a medium processing device 1 according to a first embodiment.

The medium processing device 1 illustrated in FIG. 1 includes a first unit 2, a second unit 3, a third unit 4, cassettes 5, 6, and a conveyance path 10. In this embodiment, a passbook can be cited as an example of a medium processed by the medium processing device 1. However, a different medium such as a business form or the like may be available as the medium.

The conveyance path 10 is a conveyance path 10 for conveying the medium 100, and arranged across the first unit 2, the second unit 3, and the third unit 4.

The first unit 2 includes a magnetic read/write unit 2a and an insertion/ejection slot 2b.

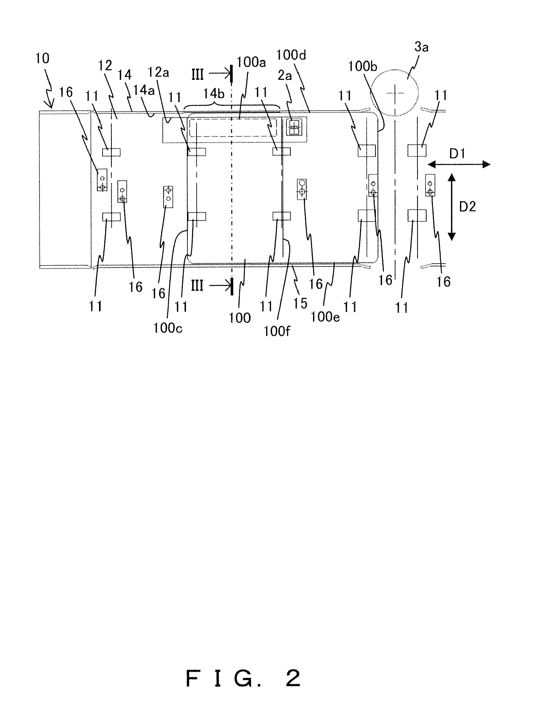

The magnetic read/write unit 2a reads/writes magnetic information in a magnetic stripe 100a of the medium 100, which is illustrated in FIG. 2, on the conveyance path 10.

The insertion/ejection slot 2b is an insertion slot of the medium 100 into the medium processing device 1, and is an ejection slot of the medium 100 from the medium processing device 1.

The second unit 3 includes a printing unit 3a. The printing unit 3a prints the medium 100.

It is preferable that a page turning unit of the medium 100, and an optical sensor that detects a printed line of the medium 100, a page mark, or a printing result after printing are provided in the second unit 3.

The third unit 4 includes a gate 4a and a temporary storage 4b.

The gate 4a takes a position for guiding the medium 100 on the conveyance path 10 to the temporary storage 4b, and also a position for the medium 100 getting out of the temporary storage 4b. It is preferable that an upside/downside turning unit that turns the medium 100 upside down is provided on the conveyance path 10 within the third unit 4.

The cassettes 5, 6 are respectively arranged above the first unit 2 and the third unit 4.

The cassettes 5, 6 respectively include two accommodation parts 5a, 5b and two accommodation parts 6a, 6b, which are arranged to face each other.

In the accommodation parts 5a, 5b and the accommodation parts 6a and 6b, feeding rollers 5a-2, 5b-2 and feeding rollers 6a-2, 6b-2, which respectively feed the medium 100, and pressing plates 5a-1, 5b-1 and pressing plates 6a-1, 6b-1, which respectively press the medium 100 against the feeding rollers, are arranged. The medium 100 fed by the feeding rollers 5a-2, 5b-2 and the feeding rollers 6a-2, 6b-2 is guided toward the conveyance path 10, and conveyed by the conveyance path 10.

FIG. 2 is a plan view illustrating the hitting guide part 14 and the like in the first embodiment.

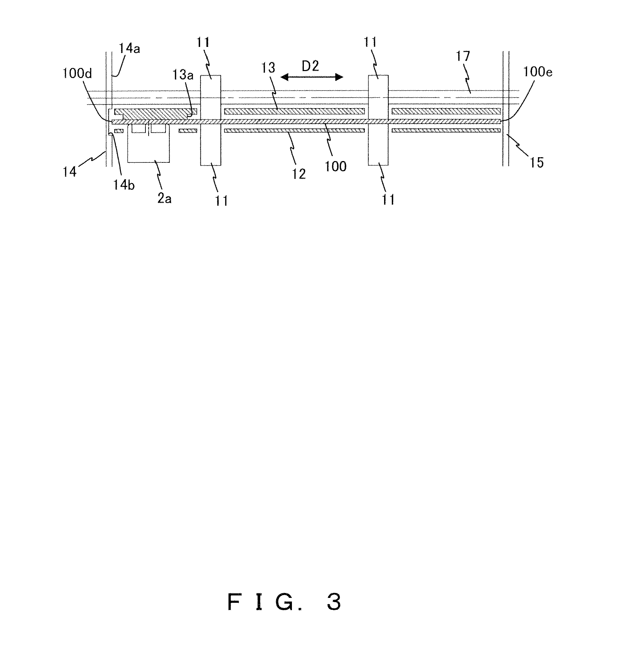

FIG. 3 is a cross-sectional view taken along III-III illustrated in FIG. 2.

The conveyance path 10 includes conveyance rollers 11, a lower conveyance guide part 12, a hitting guide part 14, a lateral conveyance guide part 15 and reflective sensors 16, which are illustrated in FIG. 2, and an upper conveyance guide part 13 and a driving roller shaft 17, which are illustrated in FIG. 3.

A pair of upper and lower conveyance rollers 11 is arranged in each of two positions on the right and the left of the conveyance path 10, and arranged at a specified interval in the conveyance direction (D1). For example, as illustrated in FIG. 3, the conveyance roller 11 on the upper side is a driving roller that is linked to the driving roller shaft 17 to rotate, whereas the conveyance roller 11 on the lower side is a driven roller pressed upward.

The lower conveyance guide part 12 and the upper conveyance guide part 13, which are illustrated in FIG. 3, are arranged to be opposed to each other. For example, the lower conveyance guide part 12 and the upper conveyance guide part 13 take the shape of a plate. The medium 100 is conveyed in the conveyance direction (the arrow D1) between the lower conveyance guide part 12 and the upper conveyance guide part 13. As illustrated in FIG. 2, the medium 100 is conveyed in a state where the bound part 100f at the center is open.

As illustrated in FIG. 3, on the upper conveyance guide part 13, a shoe part 13a that protrudes downward (toward the side of the magnetic read/write unit 2a) is formed in a portion opposed to the magnetic read/write unit 2a. The shoe part 13a supports an upper surface of the medium 100 from/to which magnetic information is read/written by the magnetic read/write unit 2a.

The hitting guide part 14 is positioned on the side of one end (the side of the left end 100d of the medium 100 in this embodiment) in the width direction (the arrow D2) of the conveyance path 10. Moreover, the hitting guide part 14 has a hit surface 14a against which a side surface (the left end 100d) of the medium 100 is hit. For example, some of the conveyance rollers 11 are taper rollers. The taper rollers guide the medium 100 to the side of the hitting guide part 14, so that the left end 100d is hit against the hitting guide part 14.

The hitting guide part 14 has a concave part 14b opposed to the side surface (the left end 100d of part of the side of the rear end 100c) of part of the medium 100 when magnetic information is read/written by the magnetic read/write unit 2a as illustrated in FIGs. 2 and 3. The concave part 14b takes a position separate from the hit surface 14a. The concave part 14b is one example of an escape part. The concave part 14b may be opposed to not part of the side of the rear end 100c but part of the side of the front end 100b, or may be opposed to a different part such as a central part or the like in the left end 100d.

The concave part 14b is provided at a position corresponding to a move range of the magnetic read/write unit 2a on the hit surface 14a. A depth of the concave part 14b is, for example, approximately 1 mm. It is desirable that a tilt surface or a curved surface is formed with respect to the width direction (the arrow D2) of the conveyance path 10 at both ends of the concave part 14b in the conveyance direction (the arrow D1) in order to prevent the front end 100b or the rear end 100c of the medium 100 from being hooked by the concave part 14b.

The lateral conveyance guide part 15 is positioned on the side of the right end 100e of the medium 100 to be opposed to the hitting guide part 14 across the lower conveyance guide part 12 and the upper conveyance guide part 13. Since the left end 100d of the medium 100 is hit against the hitting guide part 14, the medium 100 and the lateral conveyance guide part 15 do not make contact with each other.

The plurality of reflective sensors 16 are arranged along the conveyance path 10 in order to detect passage of the medium 100 (see FIG. 2).

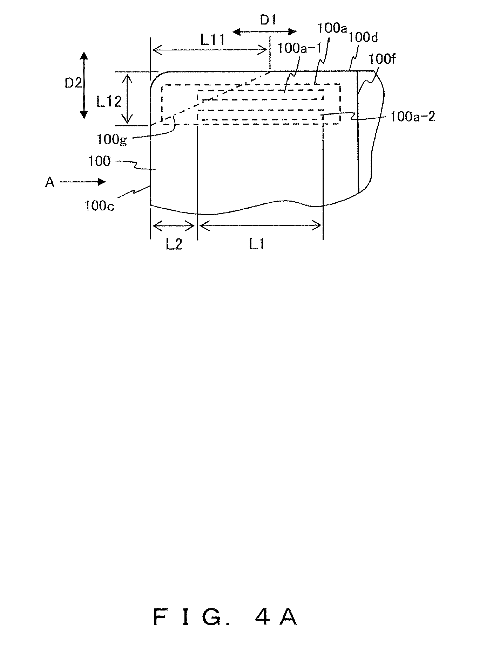

As illustrated in FIG. 4A, the magnetic stripe 100a of the medium 100 includes an external track 100a-1 positioned in the neighborhood of the left end 100d, and an internal track 100a-2 parallel to the external track 100a-1. Here, assume that the bent part 100g is caused over the rear end 100c and the left end 100d in the medium 100. The bent part 100g is positioned to cross the external track 100a-1.

For example, a length L1 of a longitudinal direction (the conveyance direction D1) of the external track 100a-1 and the internal track 100a-2 is 55 mm, and a gap L12 between the track and the rear end 100c is 17 mm. Moreover, for example, a length L11 in the conveyance direction (the arrow D1) of the bent part 100g is 50 mm, and a length L12 in the width direction (the arrow D2) is 21 mm.

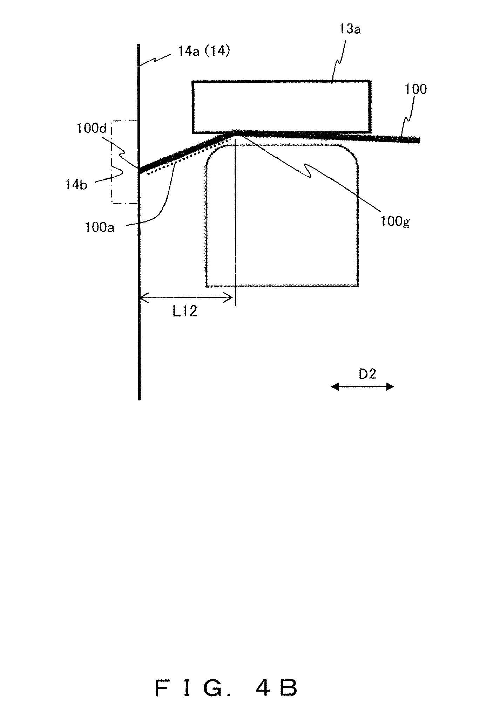

As illustrated in FIG. 4A, the magnetic stripe 100a is positioned on the bottom side of the medium 100 in this embodiment. Moreover, as illustrated in FIG. 4B (an arrow view in the A direction illustrated in FIG. 4A), part of the left end 100d is bent downward by the bent part 100g.

Accordingly, in the comparison example where the concave part 14b is not formed on the hit surface 14a, the left end 100d that is partially bent downward hits the hitting guide part 14, so that an escape part disappears even when the medium 100 is sandwiched between the magnetic read/write unit 2a and the shoe part 13a. Therefore, the bent part 100g cannot be corrected, and the gap between the magnetic stripe 100a and the magnetic read/write unit 2a is widened. However, since the concave part 14b is formed on the hit surface 14a in this embodiment, the left end 100d that is partially bent downward does not touch the hit surface 14a, and the gap between the magnetic stripe 100a and the magnetic read/write unit 2a can be prevented from being widened unlike the above described comparison example.

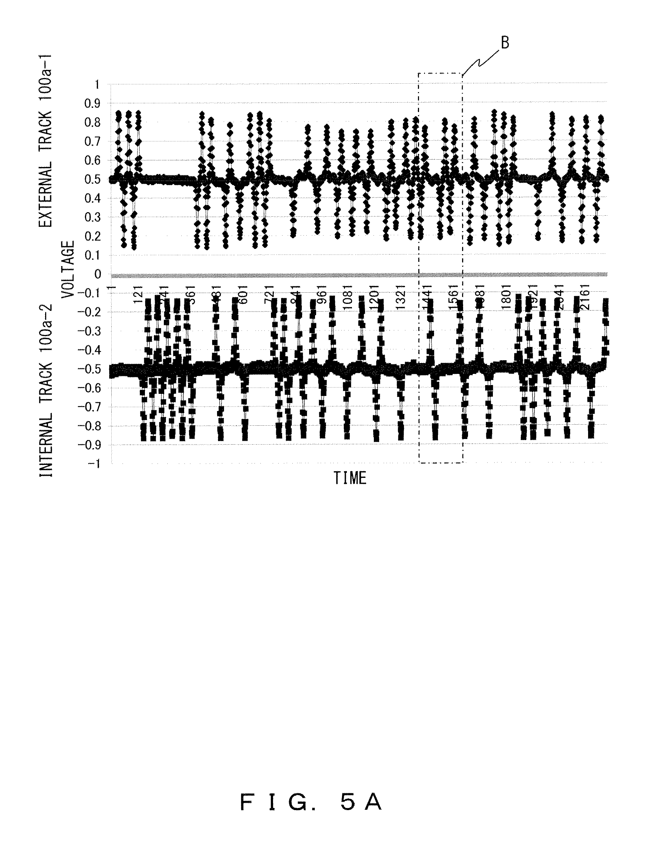

FIG. 5A illustrates magnetic waveforms (an NRZI method) obtained by the magnetic read/write unit 2a in the first embodiment.

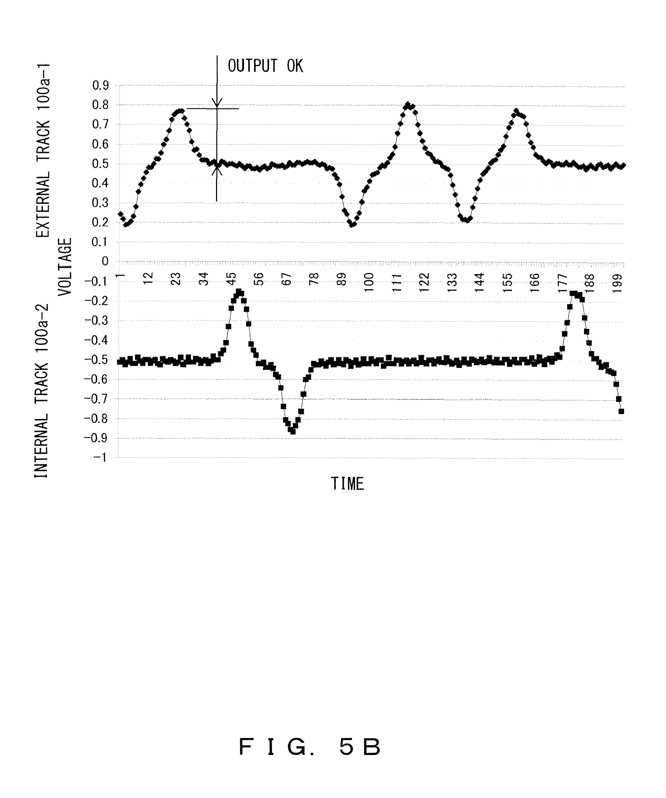

FIG. 5B illustrates magnetic waveforms where a B portion illustrated in FIG. 5A is enlarged.

The B portion (a time range from approximately 1400 to approximately 1600) in the magnetic waves illustrated in FIG. 5A corresponds to a portion where the bent part 100g crosses the external track 100a-1.

In this embodiment, the concave part 14b is formed on the hit surface 14a as described above, whereby the gap between the magnetic stripe 100a and the magnetic read/write unit 2a can be prevented from being widened. Therefore, as illustrated in FIG. 5B, an output value of magnetism of the external track 100a-1 can be obtained by a permissible amount even in the portion where the bent part 100g crosses the external track 100a-1.

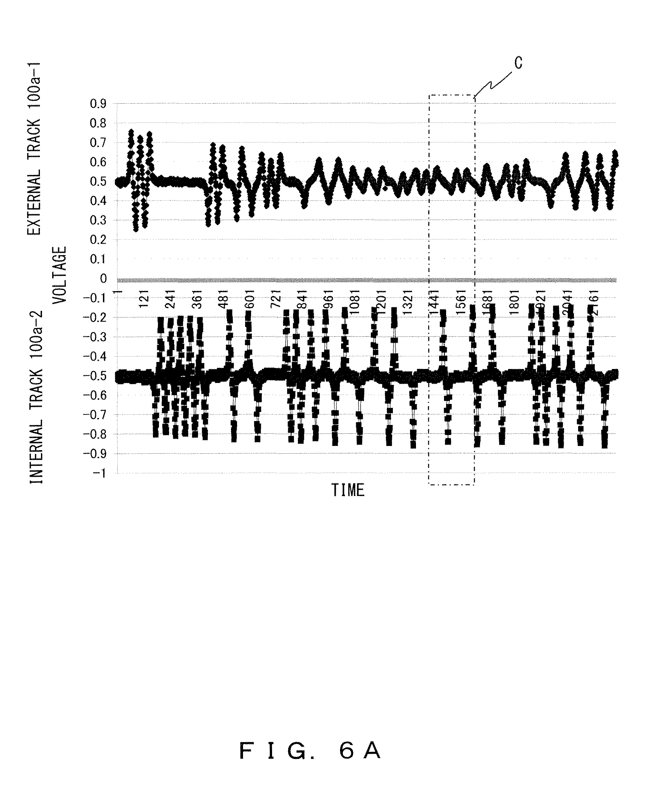

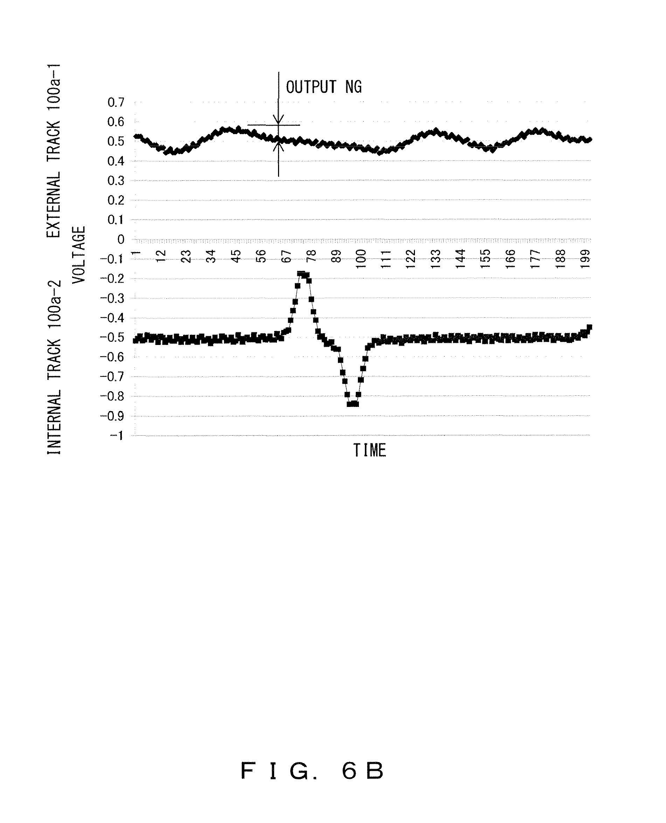

In the meantime, in the comparison example where the concave part 14b is not formed on the hit surface 14a, the output value of magnetism of the external track 100a-1 is smaller than that illustrated in FIG. 5A, and the output value of magnetism of the external track 100a-1 cannot be obtained by the permissible amount as represented by magnetic waveforms illustrated in FIG. 6B, which is an enlarged view of a C portion of FIG. 6A.

In the above described first embodiment, as illustrated in FIGs. 2 and 3, the hitting guide part 14 has the concave part 14b (one example of an escape part) opposed to the left end 100d (one example of a side surface) of part of the medium 100 when magnetic information is read/written by the magnetic read/write unit 2a. The concave part 14b takes a position separate from the hit surface 14a.

Accordingly, even in the medium 100 where the bent part 100g is caused, contact between the deformed portion of the left end 100d by the bent part 100g of the medium 100 and the concave part 14b is avoided, so that an escape space is provided when the deformed portion is sandwiched between the magnetic read/write unit 2a and the shoe part 13a, thereby enabling the magnetic stripe 100a and the magnetic read/write unit 2a to make close contact with each other.

Thus, according to this embodiment, a read/write error of magnetic information of the deformed medium 100 can be suppressed with a simple configuration.

Additionally, this embodiment uses the concave part 14b provided on the hit surface 14a of the hitting guide part 14 as an escape part, enabling a simpler configuration.

### <Second embodiment>

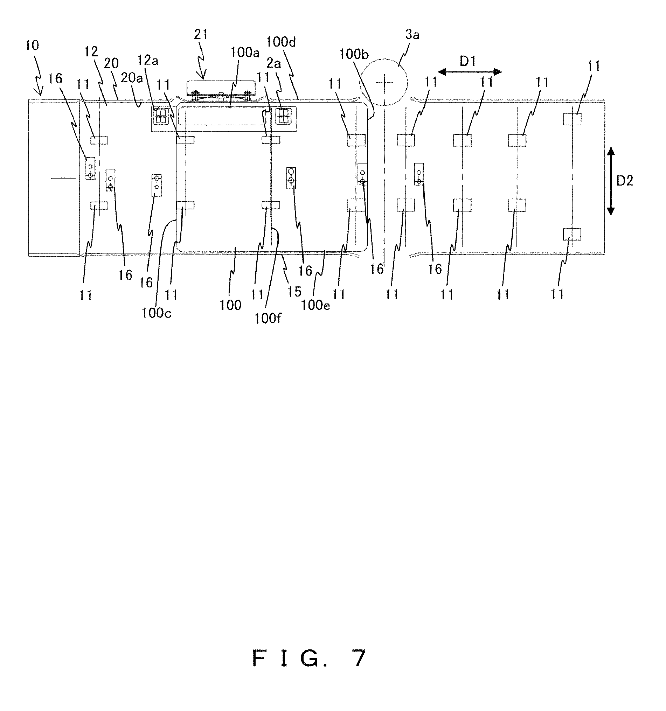

FIG. 7 is a plan view illustrating a hitting guide part 20 and the like in a second embodiment.

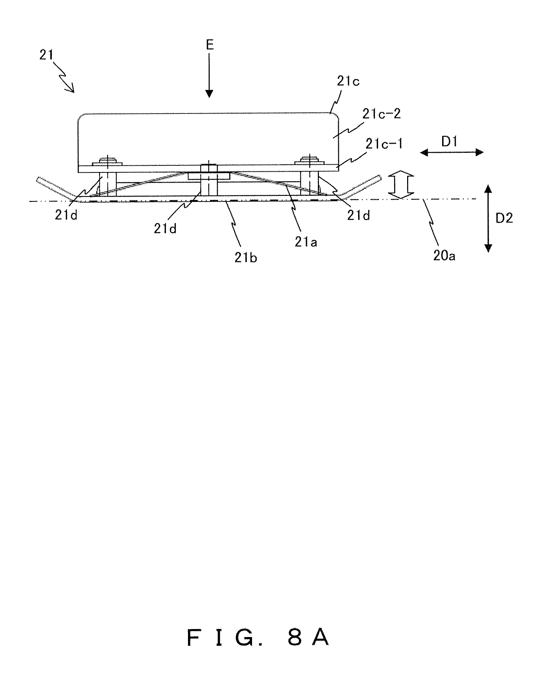

FIG. 8A is a plan view illustrating a biasing mechanism 21.

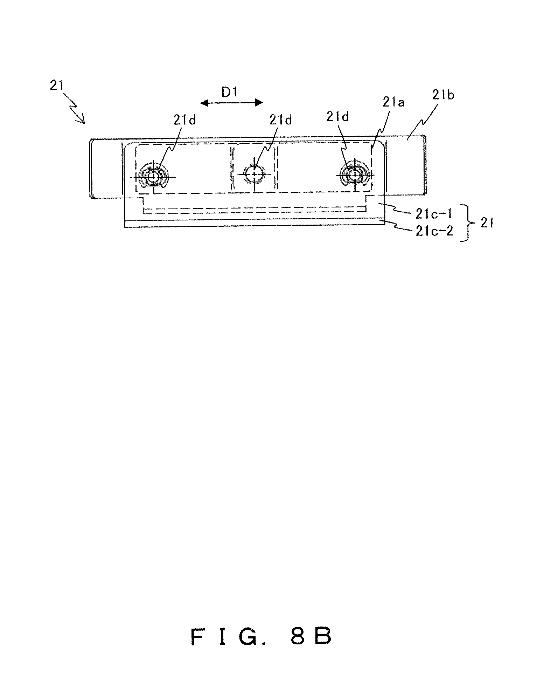

FIG. 8B is an arrow view in an E direction illustrated in FIG. 8A.

This embodiment is different from the above described first embodiment in a point that the hitting guide part 20 having the biasing mechanism 21 is arranged as a replacement for the hitting guide part 14 provided with the concave part 14b, and other points are common to each other. Therefore, descriptions of the common points are omitted.

As illustrated in FIG. 7, the hitting guide part 20 is positioned on the side of one end (the side of the left end 100d of the medium 100 also in this embodiment) in the width direction (the arrow D2) of the conveyance path 10. Moreover, the hitting guide part 20 has the hit surface 20a against which the side surface (the left end 100d) of the medium 100 is hit.

As illustrated in FIGs. 8A and 8B, the biasing mechanism 21 has an elastic member 21a, a hitting member 21b, an L-shaped support member 21c, and three guide axes 21d. The biasing mechanism 21 is one example of an escape part.

Additionally, the biasing mechanism 21 is provided in a position corresponding to the move range of the magnetic read/write unit 2a, and opposed to the side surface (the left end 100d of part of the side of the rear end 100c) of part of the medium 100 when magnetic information is read/written by the magnetic information read/write unit 2a. Moreover, as will be described in detail later, the elastic member 21a is pressed by the medium 100, so that the hitting member 21b takes a position separate from the hit surface 20a in the biasing mechanism 21.

The elastic member 21a is arranged to be interposed between the hitting member 21b and the L-shaped support member 21c. The elastic member 21a is, for example, a plate spring.

The hitting member 21b configures part of the hit surface 20a of the hitting guide part 20 illustrated in FIG. 7 in a state where the elastic member 21a is not elastically deformed as illustrated in FIG. 8A.

In the hitting member 21b, three guide axes 21d are provided, for example, integrally on the side of a back surface (the side of the reverse surface of the hit surface 20a). The three guide axes 21d are linked to the L-shaped support member 21c to be movable so that a gap between the hitting member 21b and the L-shaped support member 21c can vary within a certain range.

The L-shaped support member 21c takes the shape of L by a vertical part 21c-1 and a horizontal part 21c-2. In the biasing mechanism 21, the vertical part 21c-1 is opposed to the hitting member 21b across the elastic member 21a.

As illustrated in FIG. 8A, the elastic member 21a is elastically deformed by being pressed by the medium 100 illustrated in FIG. 7 via the hitting member 21b. With this elastic deformation, the hitting member 21b moves between a position that configures part of the hit surface 20a and a position escaped from the above position.

As described above, the hitting member 21b can escape in a direction separate from the hit surface 20a for the bent part 100g of the medium 100, which is illustrated in FIG. 4A.

Also in the above described second embodiment, similar effects, namely, effects such as an effect for suppressing a read/write error of magnetic information of the deformed medium 100 can be produced with a simple configuration as for the configuration similar to the above described first embodiment.

Additionally, in this embodiment, the biasing mechanism (one example of the escape part) 21 has the elastic member 21a that is elastically deformed by being pressed by the medium 100. The elastic member 21a is elastically deformed, so that the hitting member 21b takes a position separate from the hit surface 10a. Accordingly, the medium 100 can be guided also in a state where the hitting member 21b escapes in a direction separate from the hit surface 20a. Accordingly, a read/write error of magnetic information of the deformed medium 100 can be more securely suppressed.

Furthermore, in this embodiment, the elastic member 21a is elastically deformed, so that the hitting member 21b escapes from the position that configures part of the hit surface 20a. Accordingly, the medium 100 can be guided by the hitting member 21b also in the state where the hitting member 21b escapes in a direction separate from the hit surface 20a. Therefore, a read/write error of magnetic information of the deformed medium 100 can be more securely suppressed.

### <Third embodiment>

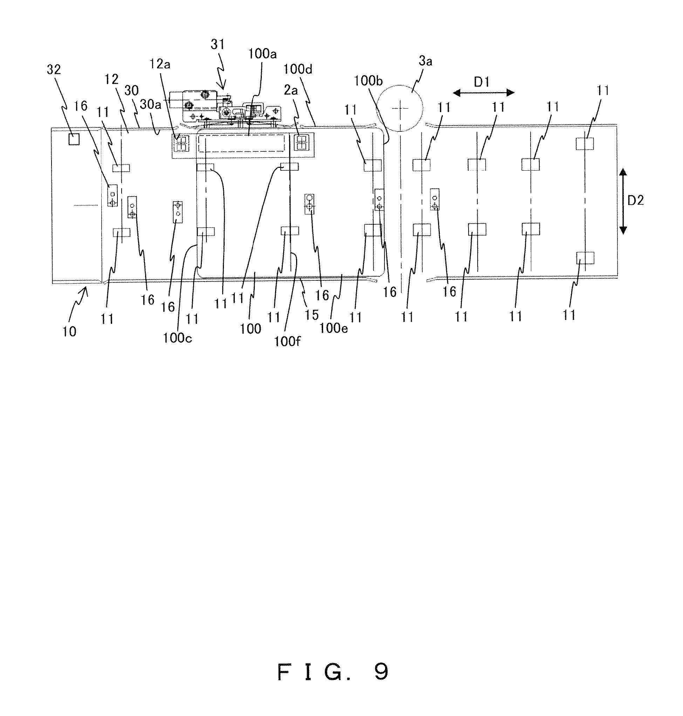

FIG. 9 is a plan view illustrating a hitting guide part 30 and the like in a third embodiment.

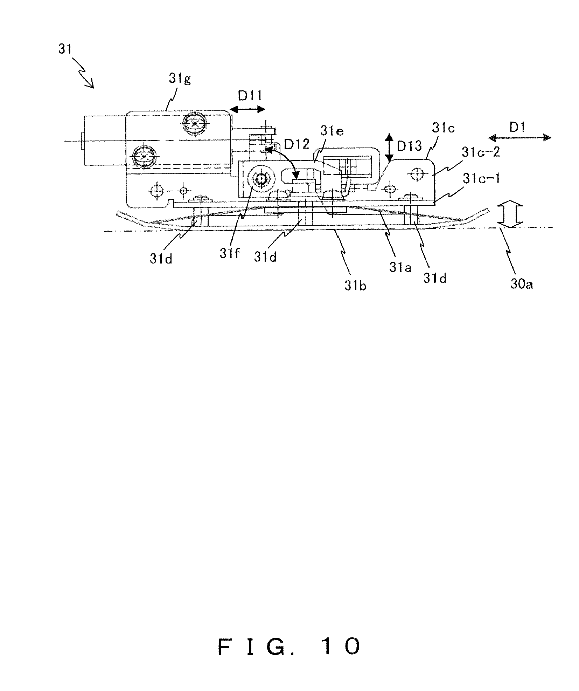

FIG. 10 is a plan view illustrating a biasing mechanism 31 in the third embodiment.

This embodiment is different from the above described second embodiment in a point that the hitting guide part 30 having the biasing mechanism 31 provided with a driving source 31g is arranged, and the other points are common to each other. Therefore, descriptions of the common points are omitted.

As illustrated in FIG. 10, the biasing mechanism 31 includes an elastic member 31a, a hitting member 31b, an L-shaped support member 31c, guide axes 31d, a biasing mechanism 31e, a rotational axis 31f, and the driving source 31g. The biasing mechanism 31 is one example of an escape part. The elastic member 31a, the hitting member 31b, the L-shaped support member 31c, and the guide axes 31d are similar to the elastic member 21a, the hitting member 21b, the L-shaped support member 21c, and the three guide axes 21d in the above described second embodiment.

As illustrated in FIG. 9, the hitting guide part 30 is positioned on the side of one end (the side of the left end 100d of the medium 100 also in this embodiment) in the width direction (the arrow D2) of the conveyance path 10, and has a hit surface 30a against which the side surface (the left end 100d) of the medium 100 is hit.

Moreover, the biasing mechanism 31 is provided at a position corresponding to the move range of the magnetic read/write unit 2a, and opposed to a side surface of part of the medium 100 (the left end 100d of part of the side of the rear end 100c) when magnetic information is read/written by the magnetic read/write unit 2a. Moreover, the driving source 31g of the biasing mechanism 31 moves the hitting member 31b that configures part of the hit surface 30a to a position separate from the hit surface 30a. The driving source 31g is, for example, a solenoid.

As illustrated in FIG. 10, the link 31e is rotatable about the rotational axis 31f that extends in the vertical direction (the arrow D12).

The driving source 31g rotates the link 31e (the arrow D12) by pulling the link 31e (the arrow D11), and pulls the hitting member 31b via the link 31e to separate from the hit surface 30a (an arrow D13).

When the driving source 31g moves the hitting member 31b in a direction separate from the hit surface 30a as described above, the degree of bending of the bent part 100g of the medium 100 as illustrated in FIG. 4A may be detected in advance by a deformation detection sensor 32 within the conveyance path 10 illustrated in FIG. 9, and a move of the hitting member 31b may be decided according to the detected degree of bending.

Additionally, similarly to the second embodiment, the elastic member 31a is elastically deformed by being pressed by the medium 100, so that the hitting member 31b can escape in a direction separate from the hit surface 30a. However, the elastic member 31a may be omitted in the biasing mechanism 31 in this embodiment.

Also in the above described third embodiment, similar effects, namely, effects such as an effect for suppressing a read/write error of magnetic information of the deformed medium 100 can be produced with a simple configuration as for the configurations similar to the above described first and second embodiments.

Additionally, in this embodiment, the biasing mechanism (one example of the escape part) 31 includes the hitting member 31b that configures part of the hit surface 30a, and the driving source 31g that moves the hitting member 31b in a direction separate from the hit surface 30a. Thus, the driving source 31g can move the hitting member 31b to an arbitrary position separate from the hit surface 30a, so that a read/write error of magnetic information of the deformed medium 100 can be more securely suppressed.

The present invention is not limited to the above described embodiments, and can be embodied by modifying the components within a scope as defined by the claims. Moreover, various inventions can be formed by suitably combining the plurality of components disclosed in the embodiments. For example, all the components disclosed in the embodiments may be suitably combined. Moreover, the components in the different embodiments may be suitably combined. As described above, various modifications and applications can be made within a scope as defined by the claims as a matter of course.

## Claims

1. A medium processing device (1), comprising:
a conveyance path (10) for conveying a medium (100);
a hitting guide part (14, 20, 30) that is positioned on a side of one end of a width direction (an arrow D2) of the conveyance path and has a hit surface (14a, 20a, 30a) hit by a side surface (100d) of the medium 100; and
a magnetic read/write unit (2a) for reading/writing magnetic information of the medium (100) on the conveyance path, wherein
the hitting guide part (14, 20, 30) has an escape part (14b, 21, 31) that is opposed to the side surface (100d) of part of the medium (100) when the magnetic information is read/written by the magnetic read/write unit (2a) and takes a position separate from the hit surface (14a, 20a, 30a).

2. The medium processing device (1) according to claim 1, wherein
the escape part (14b) is a concave part (14b) provided on the hit surface (14a) of the hitting guide part (14).

3. The medium processing device (1) according to claim 1, wherein
the escape part (21) has an elastic member (21a) that is elastically deformed by being pressed by the medium, and takes a position separate from the hit surface (20a) due to an elastic deformation of the elastic member.

4. The medium processing device (1) according to claim 3, wherein
the escape part (21) further has a hitting member (21b) that configures part of the hit surface, and
the hitting member (21b) moves to a position escaped from the position that configures part of the hit surface (20a) due to the elastic deformation of the elastic member (21a).

5. The medium processing device (1) according to claim 1, wherein
the escape part (31) has a hitting member (31b) that configures part of the hit surface (30a), and a driving source (31g) for moving the hitting member (31b) in a direction separate from the hit surface (30a).

6. An automated transaction device comprising the medium processing device (1) of any of claims 1 to 5.
